Europäisches Patentamt

**European Patent Office**

Office européen des brevets

(11) Veröffentlichungsnummer: **0 189 819**

**B1**

(12) # EUROPÄISCHE PATENTSCHRIFT

(45) Veröffentlichungstag der Patentschrifft: 17.01.90

(21) Anmeldenummer: **86100715.1**

(22) Anmeldetag: **21.01.86**

(51) Int. Cl.⁴: **B 62 D 25/04, B 60 R 21/13**

(54) Kraftfahrzeug mit einem offenen Aufbau.

(30) Priorität: **26.01.85 DE 3502574**

(43) Veröffentlichungstag der Anmeldung: **06.08.86 Patentblatt 86/32**

(45) Bekanntmachung des Hinweises auf die Patenterteilung: **17.01.90 Patentblatt 90/03**

(84) Bennante Vertragsstaaten: **DE FR GB IT SE**

(56) Entgegenhaltungen:
**FR-A-2 512 752**
**US-A-3 622 177**
**US-A-4 304 434**

(73) Patentinhaber: **Bayerische Motoren Werke Aktiengesellschaft Patentabteilung AJ-3 Postfach 40 02 40 Petuelring 130 D-8000 München 40 (DE)**

(72) Erfinder: **Ball, Wilfried Breslauerstrasse 24 D-8312 Dingolfing (DE)**
Erfinder: **Siebold, Hermann Brunnerstrasse 5 D-8000 München 40 (DE)**
Erfinder: **Stelzer, Heinz Am Stutenanger 6 D-8042 Oberschleissheim (DE)**
Erfinder: **Hens, Peter Gritschstrasse 51b D-8068 Pfaffenhofen/Ilm (DE)**
Erfinder: **Ritzl, Fritz Mathildenstrasse 29 D-8033 Planegg (DE)**
Erfinder: **Hautmann, Edmund Leitzachtalstrasse 34 D-8165 Fichbachau (DE)**

LIBERGRAF, STOCKHOLM 1990

EP 0 189 819 B1

## Beschreibung

Die Erfindung bezieht sich auf ein Kraftfahrzeug mit einem offenen Aufbau nach dem Oberbegriff des Hauptanspruchs (siehe z.B. DE-U-8 406 461).

Die Insassen eines solchen Kraftfahrzeuges sind bei einem Unfall mehr gefährdet als bei einem geschlossenen Kraftfahrzeug. Insbesondere wenn sich das Kraftfahrzeug überschlägt, fehlt ein schützendes Dach. Bei einem solchen Überschlag rollt sich das Kraftfahrzeug über den Heckbereich und die Oberkante des Frontscheibenrahmens ab. Es verbleibt ein Freiraum, durch den zumindest der vordere Fahrzeuginsasse in einem gewissen Maß geschützt ist. Verständlicherweise gilt das aber nur, wenn er sich angegurtet hat und dadurch bei dem Unfall nicht aus dem Fahrzeug geschleudert wird.

Knicken jedoch bei dem Überschlag die vorderen Karosseriepfosten ein, so verringert sich dieser Freiraum mit der Folge einer erhöhten Gefährdung der Fahrzeuginsassen.

Aufgabe der Erfindung ist es, ein gattungsgemäßes Kraftfahrzeug so weiter zu entwickeln, daß die Gefahr des Ein-bzw. Umknickens der vorderen Karosseriepfosten vermindert wird.

Die Aufgabe wird erfindungsgemäß gelöst mit einer etwa senkrecht verlaufenden Stützstrebe, die zwischen dem oberen Ende eines jeden Karosseriepfostens und der Brüstung der jeweiligen Fahrzeugtür verläuft. Weitere Ausgestaltungen der Erfindung ergeben sich aus den Unteransprüchen.

Die Stützstrebe nimmt die Kräfte auf, die bei einem Überschlag auf die Karosseriepfosten bzw. deren Querverbindung wirken. Sie leitet die Kräfte weiter in die Fahrzeugtür und damit in den Fahrzeugaufbau. In einer zweckmäßigen Ausgestaltung reicht die Stützstrebe bis zur Unterkante der Fahrzeugtür. Dadurch leitet sie die aufgenommenen Kräfte gezielt auf den üblichen Karosserieschweller.

Bei einer solchen Ausführung ist es zwangsläufig notwendig, daß die Stützstrebe mit der Fahrzeugtür verbunden ist. Aber auch in allen anderen Fällen ist dies wegen eines sich dadurch ergebenden einfachen Aufbaus zweckmäßig. Bei einer solchen Auslegung können aber Fälle auftreten, bei denen die Stützstrebe durch die eingeleiteten Kräfte nach außen oder innen gebogen wird, so daß sie ihre Funktion, das Einknicken der Karosseriepfosten zu verhindern, nur noch teilweise oder überhaupt nicht mehr erfüllen kann. In einer vorteilhaften Ausführung der Erfindung steht daher die Stützstrebe bei geschlossener Fahrzeugtür in Eingriffsverbindung mit dem oberen Ende des Karosseriepfostens.

Eine solche Eingriffsverbindung kann ein federbelasteter Schließriegel sein, der beim Schließen der Tür in ein entsprechendes Gegenstück des Karosseriepfostens einrastet. Beim Öffnen der Tür läßt sich der Schließriegel über den Türöffnungsgriff zurückziehen.

Eine weitere einfach aufgebaute Eingriffsverbindung sieht einen pilzförmigen Fanghaken an der Stützstrebe vor, der durch die Öffnung eines bei Krafteinwirkung verformbaren Gegenlagers des Karosseriepfostens ragt. Durch die Ausgestaltung läßt sich die Tür ohne weitere Maßnahmen öffnen. Bei einem Unfall jedoch verformt sich das Gegenlager und verankert den Widerhaken. Diese Konstruktion hat darüber hinaus noch den Vorteil, ein "Ausweichen" der Stützstrebe in Fahrzeuglängsrichtung wirksam zu unterbinden.

Nachfolgend wird die Erfindung anhand von Ausführungsbeispielen erläutert, die in den dazugehörigen Zeichnungen näher dargestellt sind. Es zeigen

- Fig. 1 ein Kraftfahrzeug nach oder während eines Unfalles,
- Fig. 2 die Verriegelung der Stützstrebe mit einem Schließriegel und
- Fig. 3 die Verriegelung der Stützstrebe über einen Fanghaken.

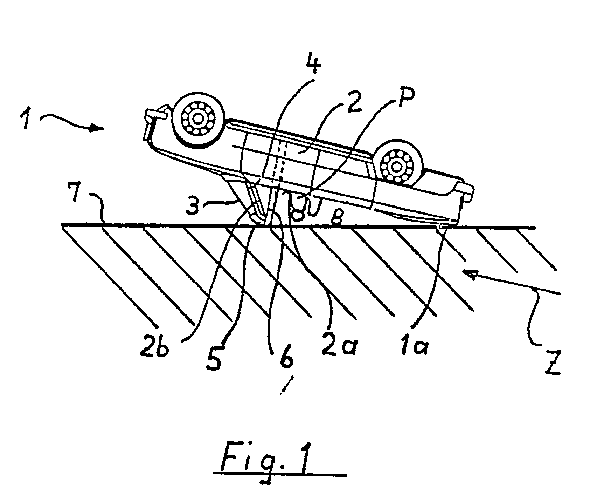

Das nach Fig. 1 auf dem Kopf stehende Kraftfahrzeug 1 weist einen offenen Aufbau auf mit vorderen Seitentüren 2. Eine Frontscheibe 3 ist gegen die Fahrtrichtung nach hinten geneigt und wird seitlich von vorderen Karosseriepfosten 4 gehalten, die in gleicher Weise wie die Frontscheibe 3 geneigt sind. Ein Querrahmen 5 verbindet die oberen Enden der Karosseriepfosten 4, von denen wegen der Darstellungsart nur einer erkennbar ist. Der Querrahmen 5 dient zugleich als oberer Scheibenrahmen. Zwischen der Brüstung 2 a und dem oberen Ende des Karosseriepfosten 4 ist eine etwa senkrecht verlaufende Stützstrebe 6 angeordnet. Die Stützstrebe 6 ragt in die Seitentür 2 hinein und verläuft bis zu deren unteren Kante. Außerdem ist sie fest mit der Seitentür 2 verbunden, macht also deren Öffnungs- und Schließbewegungen mit.

Das Kraftfahrzeug 1 stützt sich in der dargestellten Lage einmal mit seinem Heckbereich 1 a und zum anderen über den Querrahmen 5 am Boden 7 ab. Dadurch ergibt sich ein Freiraum 8, der einen Fahrzeuginsassen P schützt.

Die Stützstrebe 6 verhindert, daß die Karosseriepfosten 4 durch das Gewicht des Kraftfahrzeuges 1 und dessen Aufprall auf den Boden in Richtung der Fahrzeugbrüstung umknicken und damit den Freiraum 8 verkleinern. Die Stützstrebe 6 bildet dabei mit einem an dem Karosseriepfosten 4 anliegenden Rahmenabschnitt 2 b der Seitentür 2 einen festen Verbund. Dadurch, daß dieser Rahmenabschnitt bei geschlossener Tür an dem Karosseriepfosten 4 anliegt, wird weitgehend ein Umknicken der Stützstrebe 6 ins Fahrzeuginnere verhindert.

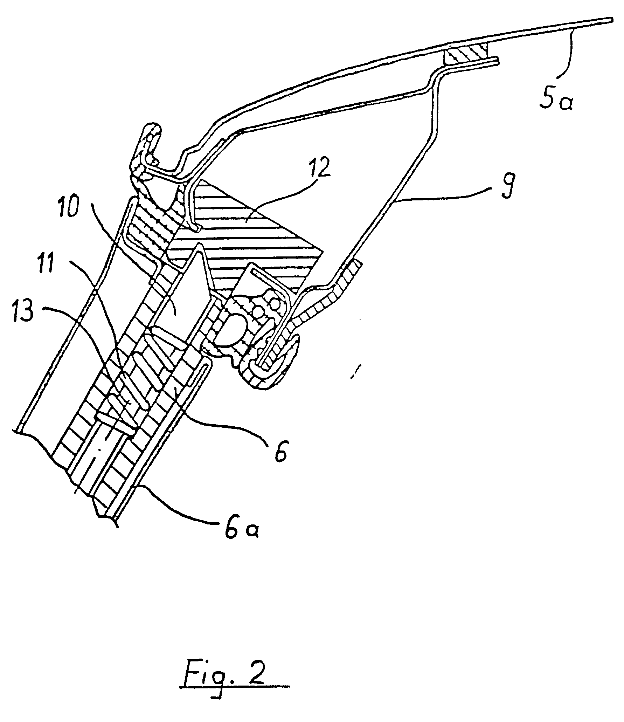

Um auch ein Umknicken nach außen der Stützstrebe 6 zu verhindern, ist sie nach Fig. 2 verriegelt. Die Fig. 2 gibt die Sicht in Pfeilrichtung Z wieder. Dabei erkennt man den Ansatz eines Dachrahmens 9, der als eine Fortsetzung des Karosseriepfostens 4 ausgebildet ist. Ein Dachblech 5 a deutet symbolisch den Querrahmen 5 an. Die Stützstrebe 6 weist hier die Form eines Rohres

3

auf, und ist mit einer Verkleidung 6 a ummantelt. In seinem Innern nimmt die Stützstrebe 6 einen Schließriegel 10 auf, den eine Druckfeder 11 nach oben in ein am Dachrahmen 9 befestigtes Gegenstück 12 drückt. Über einen Seilzug 13, der mit dem nicht dargestellten Türöffnungsgriff verbunden ist, läßt sich der Schließriegel 10 nach unten ziehen.

Fig. 2 zeigt den Zustand bei geschlossener Tür. Wirkt auf den Karosseriepfosten bzw. den Ansatz des Dachträgers 9 eine Kraft von oben, so kann die Stützstrebe wegen des Schließriegels 10 nicht nach außen ausweichen.

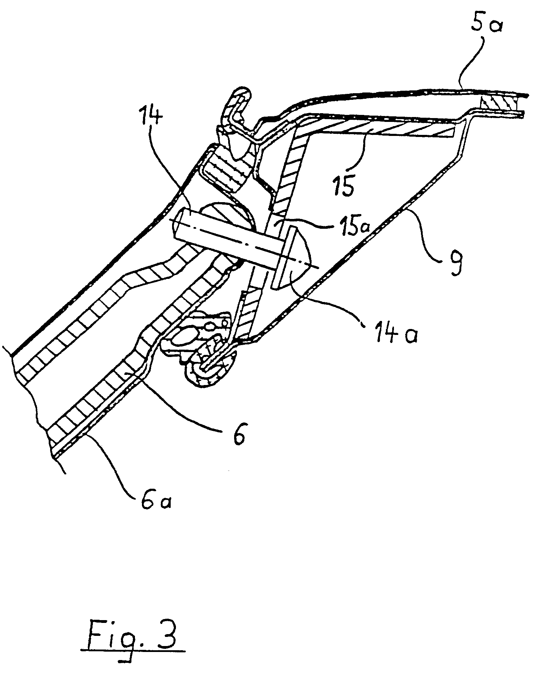

Eine andere Art der Verriegelung zeigt Fig. 3, die wiederum die Ansicht Z nach Fig. 1 darstellt. Auch hier bildet ein Rohr die Stützstrebe 6, jedoch ist an ihrem oberen Ende ein pilzförmiger Fanghaken 14 befestigt. Die Fig. 3 zeigt ebenfalls den Zustand bei geschlossener Tür. Der Fanghaken 14 ragt mit seinem pilzartigen Kopf 14 a durch eine Öffnung 15 a eines Widerlagers 15, das am Dachrahmen 9 befestigt ist. Die Öffnung 15 a ist dabei größer als der Durchmesser des Kopfes 14 a. Der Fanghaken 14 läßt sich daher beim Öffnen und Schließen ohne weiteres durch die Öffnung 15 a bewegen. Wirkt aber in einem Crash-Fall von oben eine Kraft auf den Dachrahmen, so verformt sich das Widerlager 15 und damit seine Öffnung 15 a. Der Fanghaken 14 verhakt sich dadurch in dem Widerlager 15, so daß wiederum ein Ausweichen der Stützstrebe 17 nach außen unterbunden ist.

## Patentansprüche

1. Kraftfahrzeug mit einem offenen Aufbau, mit vorderen, gegen die Fahrtrichtung geneigten und eine Frontscheibe (3) aufnehmenden Karosseriepfosten (4) und mit vorderen Seitentüren (2), dadurch gekennzeichnet, daß zwischen dem oberen Ende eines Karosseriepfostens (4) und der Brüstung (2 a) der Fahrzeugtür (2) eine in etwa senkrecht verlaufende Stützstrebe (6) verläuft.

2. Kraftfahrzeug nach Anspruch 1, dadurch gekennzeichnet, daß die Stützstrebe (6) bis zur Unterkante der Fahrzeugtür (2) reicht.

3. Kraftfahrzeug nach Anspruch 1 oder 2, dadurch gekennzeichnet, daß die Stützstrebe (6) an der Fahrzeugtür (2) befestigt ist und bei geschlossener Fahrzeugtür in Eingriffsverbindung mit dem oberen Ende des Karosseriepfostens (4) steht.

4. Kraftfahrzeug nach Anspruch 3, dadurch gekennzeichnet, daß in der Stützstrebe (6) ein federbelasteter, mit dem Türöffnungsgriff betätigbarer Schließriegel (10) angeordnet ist, der in den Karosseriepfosten (4) einschnappbar ist.

5. Kraftfahrzeug nach Anspruch 3, dadurch gekennzeichnet, daß an der Stützstrebe (6) ein pilzförmiger Fanghaken (14) befestigt ist, der durch die Öffnung (15 a) eines bei Krafteinwirkung ver-

4

formbaren Widerlagers (15) des Karosseriepfostens (Dachrahmen 9) ragt.

## Claims

1. A motor vehicle with an open body, with front bodywork pillars (4) directed contrarily of the direction of driving and accommodating a front windscreen (3), and with front side doors (2), characterised in that, between the upper end of a bodywork pillar (4) and the upper edge (2a) of the vehicle door (2), there extends an approximately perpendicularly-extending support strut (6).

2. A motor vehicle according to claim 1, characterised in that the support strut (6) reaches as far as the lower edge of the vehicle door (2).

3. A motor vehicle according to claim 1 or 2, characterised in that the support strut (6) is secured to the vehicle door (2) and is in engaging connection with the upper end of the bodywork pillar (4) when the vehicle door is closed.

4. A motor vehicle according to claim 3, characterised in that in the support strut (6), there is arranged a spring-loaded locking bolt (10) actuatable with the door-opening handle, which bolt can snap into the bodywork pillar (4).

5. A motor vehicle according to claim 1, characterised in that on the support strut (6) there is secured a mushroom-shaped catching hook (14) which extends through the opening (15a) of a counter-abutment (15) of the bodywork pillar (roof frame 9), which counter-abutment is deformable under force action.

## Revendications

1. Véhicule automobile comportant une carrosserie ouverte, des montants de carrosserie (4) antérieurs inclinés vers l'arrière par rapport au sens de la marche et recevant un pare-brise (3) et des portières latérales (2), caractérisé en ce qu'une jambe de force (6) vient entre l'extrémité supérieure d'un montant de carrosserie (4) et le gardefou (2a) de la portière du véhicule et s'étend à peu près perpendiculairement.

2. Véhicule automobile selon la revendication 1, caractérisé en ce que la jambe de force (6) va jusqu'à la bordure inférieure de la portière (2).

3. Véhicule automobile selon la revendication 1 ou 2, caractérisé en ce que la jambe de force (6) est fixée sur la portière du véhicule (2) et en position fermée de cette dernière se trouve engagée avec l'extrémité supérieure du montant de la carrosserie (4).

4. Véhicule automobile selon la revendication 3, caractérisé en ce que dans la jambe de force (6) est placé un verrou de fermeture (10) chargé par un ressort, actionnable par la poignée d'ouverture de la portière, et qui peut s'enclencher dans le montant de carrosserie (4).

5. Véhicule automobile selon la revendication 3, caractérisé en ce que sur la jambe de force (6) est fixé un crochet d'attache (14) en forme de champignon qui fait saillie à travers l'ouverture (15a) d'un contre-palier (15) du montant de la carrosserie (4) déformable sous l'effet d'une force.

*Fig.1*

5 a

12

10

9

11

13

6

6 a

Fig. 2

_Fig. 3_